# FASCICULE DE BREVET EUROPEEN

(11) **EP 0 928 658 B1**
(45) Date de publication et mention de la délivrance du brevet: **02.04.2003**
(21) Numéro de dépôt: 98403295.3
(22) Date de dépôt: 24.12.1998
(51) Int. Cl.: B23K 9/04

(54) **Procédé de protection d'un support métallique par soudage**
Auftragschweissverfahren zum Schützen von metallischen Trägern
Metallic substrate protection method using a welding process

(30) Priorité: 06.01.1998 FR 9800039
(43) Date de publication de la demande: 14.07.1999
(73) Titulaire: Alstom, 75116 Paris (FR)
(72) Inventeur: Vanderschaeghe, Alain, 59650 Villeneuve d'Ascq (FR); Jany, Michel, 59830 Bouvines (FR)
(74) Mandataire: Prugneau, Philippe

(56) Documents cités:
- EP-A- 0 304 855
- EP-A- 0 778 106
- US-A- 4 425 300

## Description

La présente invention a pour objet un procédé de protection de support métallique par soudage conformément au préambule de la revendication 1 (voir par exemple, US-A-4 425 300). L'invention concerne la protection de surfaces métalliques contre la corrosion. Elle s'applique notamment pour la protection des parois des chaudières . d'incinération des ordures ménagères. Dans de tels incinérateurs, les parois, et notamment les parois ou écrans au niveau des échangeurs de chaleur sont soumis à des corrosions sévères en fonctionnement; la diversité et l'évolution de la nature des déchets ne permettent pas de connaître précisément les nombreux processus de corrosion; ceux-ci dépendent essentiellement des composés à base de chlore ou de soufre dégagés par la combustion des ordures.

Un article de P. L. Daniel et autres, intitulé Fire side corrosion in refuse-fired boilers. Material performance in waste incineration system, NACE 92, page 4-1 à 4-15 discute l'effet dans la corrosion des composés chlorés et propose d'utiliser comme revêtement l'alliage commercialisé sous la marque Inconel 625 pour protéger les parois des chaudières contre la corrosion provoquée par les composées chlorés. Cet alliage d'Inconel 625 est un alliage présentant une teneur en Ni de 65%, en Cr de 21, en Mo de 9, et une teneur résiduelle en Fe inférieure à 5 %.

Un article de M. F. Gittos et T. G. Gooch, Effect of iron dilution on corrosion resistance of Ni-Cr-Mo alloy cladding, British Corrosion Journal, 1996, vol. 31 n° 4 pages 309 et suivantes, discute de l'effet sur la résistance à la corrosion de la dilution du substrat en acier dans un revêtement Ni-Cr-Mo; cet article compare la résistance à la corrosion de revêtements déposés par divers procédés, et propose de limiter à 5% la teneur en fer dans le revêtement, du fait que la dilution des éléments du support dans le revêtement diminue la résistance de celui-ci. Il est toutefois précisé que la teneur en fer n'est pas critique, et qu'en tout état de cause, la ségrégation inévitable des composants de l'alliage déposé par soudage réduit la résistance à la corrosion.

De façon plus générale, différents procédés ont été proposés pour recharger ou protéger les supports métalliques contre la corrosion. Ces procédés comprennent :
- les revêtements par soudure; comme dans le brevet US-A-4 425 300
- les revêtements par projection thermique, au plasma, au plasma HVOF, ou à l'oxypoudre; comme dans le brevet US-A-3 071 678
- les revêtements par diffusion.

Il a aussi été proposé d'utiliser du tube colaminé, i.e. coextrudé avec un revêtement d'un alliage de protection, par exemple de l'Inconel 625 ou un autre alliage du même type; cette solution présente l'inconvénient d'un coût élevé, d'autant que l'ensemble du tube est revêtu d'alliage de protection, alors que seule la moitié de la surface est en fait exposée à la corrosion. Ce procédé n'est évidemment par utilisable sur site pour le rechargement d'une paroi ou d'un support métallique attaqué.

Les procédés par projection thermique ou par diffusion sont aussi difficiles à mettre en oeuvre sur site; en effet, les procédés par projection thermique sont très sensibles aux paramètres opératoires, tels que la distance entre la torche et le substrat. la vitesse des gaz, l'admission du produit à projeter; l'automatisation sur site est en conséquence difficile à réaliser coûteuse à mettre en oeuvre sur site. Les revêtements par diffusion sont réalisés à haute température et ne peuvent donc être appliqués sur site; en outre, la température à laquelle ils sont mis en oeuvre dégrade les caractéristiques mécaniques du substrat, et provoque une migration des constituants du substrat dans le revêtement.

Il est connu. pour apporter une solution au problème de la dilution du support, de déposer un revêtement par soudage, en plusieurs passes de soudage; cette solution présente l'inconvénient d'un coût élevé, tant du point de vue du temps de traitement que du point de vue du coût des matériaux déposés.

Il existe donc un besoin d'un procédé de rechargement ou de protection des supports métalliques, et notamment des écrans de chaudières, qui soit susceptible d'être mis en oeuvre sur site, de façon économique, qui ne provoque pas de déformation des supports ni de variations de leurs caractéristiques mécaniques, ni de dilution des supports dans le revêtement L'invention propose encore une solution au problème de la corrosion en service; elle propose aussi une solution au problème nouveau de la corrosion aux arrêts. De ce point de vue, l'invention repose sur l'identification du problème technique nouveau suivant: la corrosion, dans un chaudière d'incinération d'ordures ménagères, ne se produit pas seulement en service, comme discuté dans les documents de l'art antérieur cité plus haut, mais aussi lors des arrêts et mises en service des chaudières. Lors du service, comme expliqué dans l'article précité de M. F. Gittos et T. G. Gooch, la teneur en Cr et Mo constitue le paramètre important, et la teneur en Fe peut varier; à l'inverse de cet enseignement de l'état de la technique, l'invention repose sur la constatation que la corrosion aux arrêts est aussi importante, et repose sur des mécanismes réactionnels différents; pour cette corrosion, la valeur maximale de la teneur en Fe est importante.

L'invention présente enfin l'avantage de pouvoir être mise en oeuvre sans refroidissement des panneaux métalliques, et permet donc une intervention plus simple et moins coûteuse.

Plus précisément, l'invention propose un procédé de protection d'un support métallique, par soudage en une seule passe tel que défini dans la revendication 1.

Dans un mode de réalisation, le soudage est un soudage dans lequel l'intensité du courant de soudage diminue de la valeur nominale à la valeur de contact lorsque la valeur de la tension de soudage est inférieure à une tension de seuil, la valeur de seuil de la tension est de l'ordre de 10 volts.

Le soudage est avantageusement un soudage sous flux d'argon.

De préférence, le revêtement présente moins de 5 % en masse de Fe.

Dans un autre mode de réalisation, la tête de soudage est dirigée vers le cordon de soudure précédemment déposé, de préférence en formant avec l'horizontale un angle variant de 0 à 20°.

Avantageusement, le support métallique est incliné et forme avec la verticale un angle entre 30 et 90°, de préférence un angle de 45°.

D'autres caractéristiques et avantages de l'invention apparaîtront à la lecture de la description qui suit d'un mode de réalisation de l'invention, donnée à titre d'exemple.

L'invention propose un procédé se protection d'un support métallique, tel une paroi ou un écran de chaudière, soumis à une corrosion comme celle qui peut être présente dans une chaudière d'incinération des ordures ménagères.

Elle propose de déposer sur le support par soudage en une seule passe un revêtement assurant une protection adéquate contre la corrosion, tant en service qu'aux arrêts de la chaudière. Le dépôt selon l'invention assure pour la première fois une protection efficace, avec une seule passe de soudage. Il s'avère de la sorte économique et efficace; il est en outre facilement industrialisable et peut être mis en oeuvre sans refroidissement de la paroi.

Un mode de réalisation de l'invention est maintenant décrit à titre d'exemple uniquement, dans le cas d'un écran de chaudière d'incinérateur; un tel écran est typiquement constitué de tubes destinées à la circulation de l'eau, reliés entre eux par des plaques métalliques dont les côtés sont soudés le long d'un génératrice d'un tube. Comme expliqué en détail plus haut, de tels écrans sont soumis à une corrosion importante, et leur épaisseur diminue donc à l'usage, jusqu'à nécessiter un renforcement ou un rechargement.

Avant de procéder à un tel rechargement, l'invention propose, de façon connue en soi, de prévoir un nettoyage de la surface à traiter; on peut utiliser à cet effet tout procédé connu de nettoyage de surfaces, permettant de débarrasser la surface des oxydes, peintures et graisses qui peuvent y être déposées; un tel nettoyage n'est pas indispensable, par exemple si l'invention est mise en oeuvre sur un paroi neuve avant son montage dans une chaudière. Avantageusement, le nettoyage s'effectue par grenaillage, dans la mesure où cette technique, à l'inverse du sablage, évite le dépôt d'une couche de silice isolante qui peut être gênante pour le soudage ultérieur à des intensités faibles.

On procède ensuite au soudage du revêtement; on utilise à cette fin un matériau de soudage du type commercialisé sous la marque Inconel 625 ou équivalent, présentant la composition suivante en pourcentage en masse :

| | |
|---|---|
| Cr | de l'ordre de 20 %; |
| Mo | de l'ordre de 9 %; |
| Fe | inférieur à 2,5 %, de préférence inférieur à 1 %; |

la balance étant constituée de Ni et de métaux sans effets du point de vue de la corrosion comme par exemple:

| | |
|---|---|
| Al | 0,2 % |
| Si | 0,2 % |
| Ca | 0,02 % |
| Nb | 3,5 % |

Ce matériau est déposé sur la surface du support à protéger ou à recharger, par soudage en une seule passe, sur une faible épaisseur; pour cela, l'invention propose d'utiliser un soudage à faibles intensités, et plus précisément un soudage semi-automatique à électrode continue sous flux gazeux. Le flux gazeux est un flux de gaz inerte, par exemple un flux d'Ar, d'Ar et d'He, ou encore d'He. De préférence, on emploie un flux d'Ar, de coût inférieur, et qui produit un arc moins chaud. L'arc étant moins chaud, la dilution du métal de base dans le métal déposé est moins importante, donc la teneur en Fe dans le revêtement diminue. En outre, l'utilisation d'Ar plutôt qu'un mélange Ar et He fait diminuer le taux de Fe dans l'alliage déposé. Le réglage du débit du gaz employé peut facilement être réalisé, en fonction des conditions de travail par l'homme du métier spécialiste du soudage.

Le soudage s'effectue avec un balayage horizontal, la tête de soudage descendant en dessous du cordon qui vient d'être déposé pour déposer un nouveau cordon. Ceci peut être effectué par un mouvement de la tête de soudage ou par un mouvement de la pièce soudée, par exemple dans le cas de revêtement de la surface extérieure d'un tube circulaire. Le balayage génère de préférence des cordons sensiblement parallèles, et non pas comme dans les procédés classiques des cordons en zig-zag, ce qui évite autant que possible les points chauds. On procède par exemple à un balayage horizontal, suivi d'un temps de descente très court, et d'un balayage horizontal dans le sens opposé. L'amplitude du balayage, i.e. la longueur de chaque cordon dépend de la topologie de la surface à traiter, et notamment de son rayon de courbure; dans le cas d'un tube de chaudière, une longueur de l'ordre de 5 à 20 mm a donné des résultats satisfaisants.

L'invention propose aussi d'orienter la tête de soudure vers le haut, de la sorte que le point d'attaque de l'arc de soudage se trouve sur le cordon de soudure précédemment déposé et non pas directement sur le support à traiter; le cordon déposé précédemment joue alors un rôle de bouclier; ceci limite la température du support lors de la mise en oeuvre de l'invention, et de nouveau limite la diffusion des composants du support dans le revêtement; en outre, ceci améliore la finesse du revêtement et son uniformité. L'angle entre l'axe de la tête de soudage et l'horizontale peut par exemple être compris entre 0 et 20°.

Avantageusement, la surface du support traitée selon l'invention est inclinée, de sorte à former avec la verticale un angle de 30°, de préférence de 45°, et qui peut aller jusqu'à 90°. Ceci améliore aussi la finesse du revêtement et son uniformité, dans la mesure où le cordon de soudure qui vient d'être déposé a tendance à s'étaler vers le bas pour mieux recouvrir la surface traitée.

Le mouvement de la tête de soudage est avantageusement mécanisé, de sorte à permettre le traitement de grandes surfaces et assurer une bonne reproductibilité du traitement. La vitesse de déplacement et le diamètre du fil sont choisis en fonction de la nature de la surface, dans des plages de 8 à 20 cm/min (0,0013 à 0,0033 m/s) et de 0,8 à 1,6 mm. La vitesse de descente, i.e. l'intervalle entre deux cordons de soudage adjacents, est choisie de sorte à assurer un effet bouclier du cordon précédent, comme expliqué en détail plus haut.

Chacune des caractéristiques du mouvement choisi contribue à l'uniformité d'énergie déposée par unité de surface, et préservant le support à traiter grâce au rôle de bouclier du cordon précédent.

Le générateur de courant utilisé pour le soudage fonctionne en régime de court-circuit, avec des intensités faibles. Pour cela, la valeur de l'intensité est contrôlée en fonction de la tension entre l'électrode de soudage et la surface du support; lorsque la tension U descend en dessous d'une valeur de seuil U_{S}, l'intensité diminue et prend une valeur appelée dans la suite intensité de contact, de sorte à éviter toute intensité importante lorsque l'électrode de soudage entre en contact avec la surface à traiter ou avec le cordon précédent; on limite ainsi les projections de matière et les discontinuités dans le cordon déposé. Lorsque la tension atteint une valeur nulle, i. e. après le contact entre l'électrode et la surface à traiter, l'intensité reprend sa valeur nominale, de sorte à assurer la fusion du fil et le détachement de l'électrode.

Dans un exemple de mise en oeuvre de l'invention, on utilise à cet effet un générateur du commerce, commercialisé sous la référence Lincoln STT, conçu pour permettre des passes de pénétration destinées à remplacer un soudage TIG; le générateur mesure 2000 fois par seconde la valeur de la tension U, la compare à une valeur de seuil Uₛ de l'ordre de 10 volts et pilote en fonction des résultats de la comparaison l'intensité du courant de soudage. Ce courant peut par exemple varier entre 55 et 195 ampères; la valeur de 55 A est imposée lorsque la tension U est inférieure à la valeur de seuil, et est non nulle. La valeur nominale de 195 A est imposée pour une tension U nulle, ou lorsque la tension est supérieure à la valeur de seuil. Une gamme préférée de valeurs pour l'intensité nominale est de 150 à 320 ampères; une gamme de valeurs préférées, pour l'intensité de contact est de 30 à 70 ampères.

Le procédé de l'invention permet un travail à des températures faibles: ceci limite la diffusion du métal du support dans le revêtement; en outre, ceci évite de devoir refroidir le support lors du soudage. Dans le cas des chaudières, on peut ainsi travailler sans mise en eau de la chaudière, et donc intervenir plus facilement. On évite aussi, en cas de fausse manipulation, si un tube est percé, de devoir vider l'ensemble du circuit d'eau de la chaudière. En outre, ceci permet de travailler sur une chaudière neuve en cours d'assemblage, sans attendre la fin de l'assemblage du circuit d'eau. On peut aussi appliquer le procédé de l'invention à des parois non tubées, par exemple une canalisation d'usine soumise à une corrosion.

On dépose en suivant le procédé de l'invention un revêtement d'une épaisseur de quelques millimètres, typiquement une épaisseur de l'ordre de 2 mm. Le revêtement obtenu après dépôt présente alors une composition en pourcentage en masse de plus de 80 % de Ni et Cr, moins de 5 % de Fe, entre 8 et 10 % de Mo, le reste étant constitué d'éléments non significatifs du point de vue de la corrosion. La présence de Cr et Mo assure une protection efficace contre la corrosion en service; la faible teneur en Fe assure une protection efficace contre la corrosion aux arrêts. L'utilisation du procédé selon l'invention permet de limiter la migration du fer depuis le support dans le revêtement, par un choix approprié des paramètres électriques et mécaniques du soudage.

Bien entendu, la présente invention n'est pas limitée aux exemples et modes de réalisation décrits et représentés, mais elle est susceptible de nombreuses variantes accessibles à l'homme de l'art. On pourrait ainsi utiliser d'autres types d'alliages que celui commercialisé sous la référence Inconel 625.

Il est aussi clair que l'invention n'est pas limitée à une application aux chaudières d'incinération des ordures ménagères, mais s'applique pour la protection et le rechargement de tous les types de parois métalliques.

## Revendications

1. Procédé de protection d'un support métallique, par soudage en une seule passe d'un revêtement présentant une composition en pourcentage en masse de plus de 80% de Cr et Ni, de 8 à 10% de Mo, de moins de 2,5% de Fe, le reste étant constitué de métaux sans effets du point de vue de la corrosion, **caractérisé en ce que** ledit soudage est un soudage à électrode continue sous flux gazeux, **en ce que** la valeur nominale de l'intensité du courant de soudage est comprise entre 150 et 320 ampères et la valeur de contact est comprise entre 30 et 70 ampères, et **en ce que** le soudage est effectué avec un balayage horizontal en déposant un cordon de soudure en dessous du cordon précédemment déposé.

2. Procédé selon la revendication 1, dans lequel l'intensité du courant de soudage diminue de la valeur nominale à la valeur de contact lorsque la valeur de la tension de soudage est inférieure à une tension de seuil, ladite tension de seuil étant de l'ordre de 10 volts.

3. Procédé selon l'une des revendications 1 ou 2, **caractérisé en ce que** le soudage est un soudage sous flux d'argon.

4. Procédé selon l'une des revendications 1 à 3, **caractérisé en ce que** le revêtement présente moins de 1% en masse de Fe.

5. Procédé selon l'un des revendications 1 à 4, **caractérisé en ce que** la tête de soudage est dirigée vers le cordon de soudure précédemment déposé, de préférence en formant avec l'horizontale un angle variant de 0 à 20°.

6. Procédé selon l'une des revendications 1 à 5, **caractérisé en ce que** le support métallique est incliné et forme avec la verticale un angle entre 30 et 90°, de préférence un angle de 45°.

## Claims

1. Process for protecting a metallic substrate, by welding in a single operation a coating having a percentage composition by mass of more than 80% Cr and Ni, 8 to 10% Mo and less than 2.5% Fe, the remainder consisting of metals that have no effect as regards corrosion, **characterized in that** the said welding is a continuous arc welding operation under a flow of gas, **in that** the nominal value of the size of the welding current is between 150 and 320 amps and the contact value is between 30 and 70 amps, and **in that** the welding is carried out with horizontal flushing by laying a welding bead underneath the bead previously laid.

2. Process according to Claim 1, in which the size of the welding current decreases from the nominal value to the contact value when the value of the welding voltage is less than a threshold voltage, the said threshold voltage being about 10 volts.

3. Process according to either of Claims 1 and 2, **characterized in that** the welding is a welding operation under a flow of argon.

4. Process according to one of Claims 1 to 3, **characterized in that** the coating contains less than 1% by mass of Fe.

5. Process according to one of Claims 1 to 4, **characterized in that** the welding head is directed towards the welding bead previously laid, preferably forming with the horizontal an angle ranging from 0 to 20°.

6. Process according to one of Claims 1 to 5, **characterized in that** the metallic substrate is inclined and forms with the vertical an angle of between 30 and 90° and preferably an angle of 45°.

## Patentansprüche

1. Auftragsschweißverfahren zum Schützen von metallischen Trägem durch einen Überzug in einem Durchgang, welcher eine Zusammensetzung in Massenprozent von mehr als 80 % Cr und Ni, von 8 bis 10 % Mo, von weniger als 2,5 % Fe aufweist, wobei der Rest gebildet wird von Metallen ohne Einfluß unter dem Gesichtspunkt der Korrosion,
**dadurch gekennzeichnet,**
**dass** das Schweißen ein Schweißen mit selbstbackender Elektrode unter Gasfluss ist, dass der Nominalwert der Intensität des Schweißstroms zwischen 150 und 320 Ampere und der Kontaktwert zwischen 30 und 70 Ampere beträgt, und dass das Schweißen ausgeführt wird mit einem horizontalen Überstreichen durch Ablegen einer Schweißnaht unter der vorhergehend abgelegten Naht.

2. Verfahren nach Anspruch 1, bei dem die Intensität des Schweißstroms abnimmt von dem Nominalwert zu dem Kontaktwert, wenn der Spannungswert des Schweißens unterhalb einer Schwellenspannung liegt, wobei die Schwellenspannung in der Größenordnung von 10 Volt beträgt.

3. Verfahren nach einem der Ansprüche 1 oder 2, **dadurch gekennzeichnet, dass** das Schweißen ein Schweißen unter Argonfluss ist.

4. Verfahren nach einem der Ansprüche 1 bis 3, **dadurch gekennzeichnet, dass** der Überzug weniger als 1 Massen-% Fe aufweist.

5. Verfahren nach einem der Ansprüche 1 bis 4, **dadurch gekennzeichnet, dass** der Schweißkopf zu der vorher abgelegten Schweißnaht gerichtet wird, vorzugsweise unter Bildung eines Winkels zur Horizontalen, der zwischen 0 und 20° variiert.

6. Verfahren nach einem der Ansprüche 1 bis 5, **dadurch gekennzeichnet, dass** der metallische Träger geneigt ist und mit der Vertikalen einen Winkel zwischen 30 und 90°, vorzugsweise von 45° bildet.
